# EUROPÄISCHE PATENTSCHRIFT

(11) **EP 0 693 031 B1**
(45) Veröffentlichungstag und Bekanntmachung des Hinweises auf die Patenterteilung: **04.03.1998**
(21) Anmeldenummer: 94911082.9
(22) Anmeldetag: 28.03.1994
(51) Int. Cl.: B61L 29/30, G01S 13/02, G08B 13/184

(54) **ANORDNUNG ZUM DETEKTIEREN EINES HINDERNISSES**
OBSTACLE-DETECTION DEVICE
SYSTEME PERMETTANT DE DETECTER UN OBSTACLE

(30) Priorität: 08.04.1993 DE 9305611 U
(43) Veröffentlichungstag der Anmeldung: 24.01.1996
(73) Patentinhaber: SIEMENS AKTIENGESELLSCHAFT, 80333 München (DE)
(72) Erfinder: HOFFMANN, Josef, D-76131 Karlsruhe (DE); MAGORI, Valentin, D-81539 München (DE)
(86) Internationale Anmeldenummer: DE9400346
(87) Internationale Veröffentlichungsnummer: WO9423981

(56) Entgegenhaltungen:
- DE-A- 2 401 043
- DE-A- 2 656 706
- US-A- 3 706 094
- US-A- 4 746 830

## Beschreibung

Die Erfindung betrifft eine Anordnung zum Detektieren eines Hindernisses nach dem Oberbegriff von Anspruch 1.

Bei einer derartigen, aus der DE-A-2 401 043 bekannten Anordnung wird von einer Sendeeinrichtung ein Abfragesignal durch einen zu überwachenden Bereich, insbesondere einen Bahnübergang, hindurch zu einer Reflektor-Einrichtung bestehend aus einer Kette von Reflektoren geschickt, die das Abfragesignal als Antwortsignal an eine Empfangs- und Auswerteeinrichtung reflektieren. In dieser wird das Antwortsignal im Hinblick auf eine Veränderung durch in dem überwachten Bereich vorhandene Objekte ausgewertet.

Aus der EP-A-0 448 803 ist bekannt, ein Hindernis in einem zu überwachenden Bereich durch ein Differenzbild zu detektieren, das aus einem aufgenommenen Bild mit und einem ohne Blitzlicht gebildet wird. Diese Art der Detektion wird wesentlich vom Wetter und von der Tageszeit beeinflußt.

Der vorliegenden Erfindung liegt die Aufgabe zugrunde, eine Anordnung der eingangs genannten Art zu schaffen, die ein Hindernis in einem zu überwachenden Bereich eindeutig detektiert und möglichst wenig störenden Einflüssen ausgesetzt ist.

Diese Aufgabe wird durch die im Anspruch 1 angegebenen Merkmale gelöst

Die Oberflächenwellen-Identifizierungsmake kann dabei aus einem an sich bekannten passiven Sensor in Form eines Oberflächenwellen-Bauelements bestehen, dem ein hochfrequentes Abfragesignal per Funk über eine Antenne der Marke zugeführt wird. Der Inter-Digitalwandler setzt das Abfragesignal in eine akustische Welle um, die sich auf der Oberfläche des Bauelementes ausbreitet und an einer reflektierenden Struktur, einem Reflektor, reflektiert wird. Die reflektierte akustische Welle wird wiederum durch den Inter-Digitalwandler in ein hochfrequentes Signal umgesetzt und über die Antenne in Richtung Empfangs- und Auswerteeinrichtung ausgestrahlt. Ein Hindernis in dem zu überwachenden Bereich verändert den Pegel des Antwortsignals, wodurch das Hindernis durch die Auswerteeinheit detektiert werden kann.

Meistens bewirkt ein Hindernis eine Verringerung des Antwortsignalpegels; es kann aber auch vorkommen, daß sich der Pegel z. B. durch Randstrahlen vergrößert. In der Auswerteeinrichtung kann deshalb für diesen Fall eine entsprechende Auswertevorschrift hinterlegt sein, die diese Randbedingungen berücksichtigt. In der Regel schreibt die Auswertevorschrift lediglich vor, den Antwortpegel mit einem Schwellwert zu vergleichen. Wird dieser Schwellwert unter- oder gegebenenfalls überschritten, so weist dies auf ein Hindernis im zu überwachenden Bereich hin, das die Auswerteeinheit anzeigt.

In einer Ausgestaltung der Erfindung sind mehrere Oberflächenwellen-Identifizierungsmarken vorgesehen, und an jeder Marke ist der oder jeder Reflektor unterschiedlich positioniert. Dadurch wird erkannt, welche Übertragungsstrecke zwischen Auswerteeinheit und einer Marke durch Objekte gestört ist. Das durch die Empfangseinrichtung empfangene Signal, welches durch Überlagerung gleichzeitig ankommender Antwortsignale mehrerer Oberflächenwellen-Identifizierungsmarken entsteht, wird von der Auswerteeinheit ausgewertet. Durch die unterschiedliche Positionierung der Reflektoren entstehen unterschiedliche Verzögerungen der reflektierten Oberflächenwellen und dadurch Antwortsignale unterschiedlicher Laufzeiten. Das bedeutet, daß die Positionierung eines Reflektors auf einer Marke einer Kennung dieser Marke entspricht. In der Auswerteeinheit werden diese Laufzeiten berücksichtigt, indem z.B. entsprechende Zeitfenster gebildet werden, innerhalb welchen die Antwortsignale empfangen werden müssen. Diejenige Übertragungsstrecke gilt als gestört, deren Marke einen Pegel erzeugt, welcher innerhalb des dieser Marke zugeordneten Zeitfensters einen Schwellwert über- bzw. unterschreitet.

In einer weiteren Ausgestaltung der Erfindung ist die Anordnung mit mehreren Oberflächenwellen-Identifizierungsmarken versehen, von denen an einer vorgebbaren Anzahl der Marken die Position des oder jedes Reflektors identisch ist. In diesen Marken mit identischer "Kennung" werden Antwortsignale mit gleichen Laufzeiten erzeugt, welche sich überlagern und im Rahmen des Empfangssignals der Empfangs- und Auswerteeinrichtung zugeführt werden. Je nach der Position der Oberflächenwellen-Identifizierungsmarken im zu überwachenden Bereich können sich die Signale unterschiedlich "konstruktiv" oder "destruktiv" überlagern. Durch geringe örtliche Verschiebungen kann beispielsweise erreicht werden, daß sich die Pegel der Antwortsignale im Empfangssignal gegenseitig auslöschen oder vergrößern. Entsprechend der Position der Reflektoren und der Position der Marken im zu überwachenden Bereich kann dann in der Auswerteeinheit die Auswertevorschrift hinterlegt sein, aus der hervorgeht, welcher Pegel (Schwellwert) für das durch die Überlagerung erzeugte Abfragesignal dieser Marken zu erwarten ist. Die Abweichung von diesem Pegel weist darauf hin, daß ein Hindernis im Überwachungsbereich vorhanden ist.

Anordnungen, bei denen durch eine entsprechende Positionierung der Marken eine Auslöschung ihrer Antwortsignale zweier oder mehrerer Marken erreicht wurde, lassen erwarten, daß das Ausbleiben dieses Signals ein empfindliches Kriterium für zu detektierende Hindernisse bedeutet. Bei zwei Marken wird eine Auslöschung der sich überlagernden Signale dann erreicht, wenn sich die jeweilige Entfernung zwischen dieser Marke und der Auswerteeinheit um ein ungerades Vielfaches eines Viertels der Wellenlänge unterscheidet. Bei geraden Vielfachen der Viertel-Wellenlänge erfolgt die maximale konstruktive Überlagerung, und dem Pegel des "kumulierten" Signals ist zu entnehmen, wieviele gestörte bzw. ungestörte Überwachungsbereiche vorliegen. Da jede der Marken in der Regel über mehrere Reflektoren verfügt, ist auch eine Kombination zweier oder mehrerer Auswertevorschriften denkbar. Auch kann zur Interpretation und Klassifikation der Antwortsignale Fuzzy-Logik eingesetzt werden.

In einer weiteren Ausgestaltung der Erfindung sind Ablenkmittel zum Ablenken der Abfrage- und Antwortsignale vorgesehen. Dadurch ist es z. B. möglich, Hindernisse in einem "geknickten" Überwachungsbereich zu detektieren.

Die erfindungsgemäße Anordnung ist ebenfalls dazu geeignet festzustellen, ob ein in einem zu überwachenden Bereich abgestelltes Objekt entfernt wurde. Auch eine Verschiebung des Objektes innerhalb dieses Bereiches kann erkannt werden. Weiterhin kann die Anordnung derart ausgebildet werden, daß die Richtung der Verschiebung ermittelt wird.

Anhand der Zeichnung, in der ein Ausführungsbeispiel veranschaulicht ist, werden die Erfindung, deren Ausgestaltungen sowie Vorteile näher erläutert.

Es zeigen
- Figur 1: den Aufbau einer Oberflächenwellen-Identifizierungsmarke,
- Figur 2: eine Anordnung zum Überwachen des Gleisbereiches eines Bahnüberganges,
- Figur 3: den Aufbau der Oberflächenwellen-Identifizierungsmarken in der Anordnung gemäß Figur 2 und
- Figur 4: Signalverläufe der in der Anordnung gemäß Figur 2 vorkommenden Abfrage- und Antwortsignale.

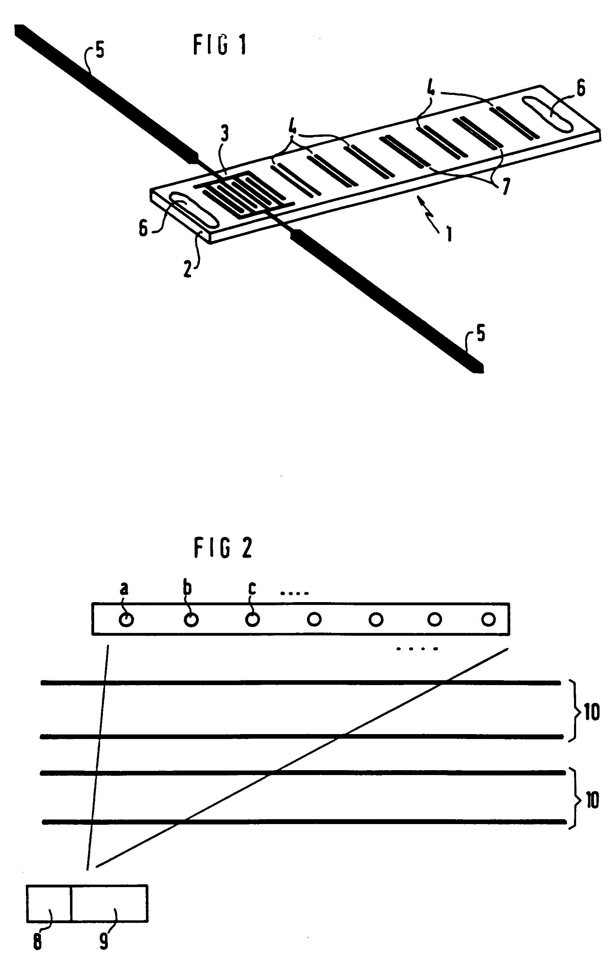

In Figur 1 ist mit 1 eine Oberflächenwellen-Identifizierungsmarke bezeichnet, die im wesentlichen aus einem Oberflächenwellen-Substrat 2 besteht und einen Inter-Digitalwandler 3, Absorber 6 und Reflektoren 4 aufweist. An den Inter-Digitalwandler 3 ist eine Antenne 5 angeschlossen, die einerseits ein Abfragesignal in Form eines Funksignals von einer Sendeeinrichtung empfängt und andererseits ein Antwortsignal des Inter-Digitalwandlers einer Empfangs- und Auswerteeinrichtung ausstrahlt. Der Inter-Digitalwandler 3 wandelt das Abfragesignal in eine akustische Welle um, die sich auf der Oberfläche der Marke ausbreitet. Ein Teil dieser Welle wird durch den dem Wandler 3 nächstliegenden Reflektor reflektiert, der andere Teil breitet sich weiter auf der Oberfläche der Marke bis zum nächsten Reflektor aus, der wiederum einen Teil reflektiert und einen Teil ungehindert passieren läßt. Nichtreflektierte Wellenanteile werden schließlich von den Absorbern 6 absorbiert. Durch die unterschiedliche Positionierung der Reflektoren 4 entstehen reflektierte Oberflächenwellen, die entsprechend dieser Positionierung unterschiedlichen zeitlichen Verzögerungen unterliegen. Der Inter-Digitalwandler 3 erzeugt aus diesen reflektierten Oberflächenwellen ein Antwortsignal, das über die Antenne 5 ausgestrahlt und von der Empfangs- und Auswerteeinrichtung empfangen wird. Die Reflektoren 4 können in gewünschter Anzahl und an verschiedenen Stellen der Marke angeordnet werden, um ein gewünschtes Antwortsignal und dadurch eine Kennung dieser Marke zu erzeugen. In der Figur sind unbesetzte Stellen mit 7 bezeichnet, die zur Aufnahme weiterer Reflektoren vorgesehen sind.

Zur Überwachung des Gleisbereiches 10 eines Bahnübergangs weist eine Anordnung (Figur 2) eine Sendeeinrichtung 8 auf, die vorteilhaft auf derselben Seite des Bahnüberganges wie eine Empfangs- und Auswerteeinrichtung 9 angeordnet ist. Auf der gegenüberliegenden Seite des Bahnübergangs sind mehrere Oberflächenwellen-Identifizierungsmarken a, b, c, ... angeordnet, deren jeweiliger Reflektor, wie im folgenden noch gezeigt wird, unterschiedlich positioniert ist. Die jeweilige Verbindungslinie zwischen der Auswerteeinrichtung 9 und einer Oberflächenwellen-Identifizierungsmarke a, b, c, ... bildet eine zu überwachende Strecke. Ein in dieser Strecke befindliches Objekt verändert den Pegel des entsprechenden Antwortsignals.

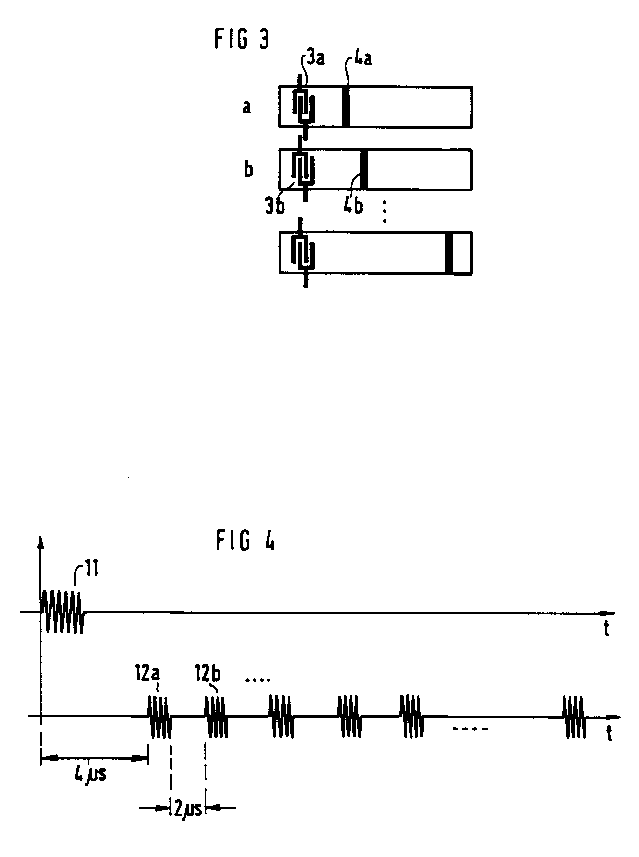

Die Positionierung der Reflektoren der in Figur 2 dargestellten Oberflächenwellen-Identifizierungsmarken a, b, c, ... zeigt Figur 3. Jede Marke a, b, ... weist lediglich einen Reflektor 4a, 4b, ... auf. Die Abstände der Reflektoren 4a, 4b, ... von den jeweiligen Inter-Digitalwandlern 3a, 3b, ... sind unterschiedlich, wodurch die reflektierten Oberflächenwellen der Marken a, b, ... zeitlich verzögert werden. Die Wandler 3a, 3b, ... erzeugen aus diesen Oberflächenwellen Antwortsignale zu unterschiedlichen Zeiten, wie in Figur 4 verdeutlicht wird.

Die Sendeeinrichtung 8 (Figur 2) führt ein kurzzeitiges, hochfrequentes Abfragesignal 11 den Marken a, b, ... (Figur 2) zu, deren Wandler 3a, 3b, ... (Figur 3) Antwortsignale 12a, 12b, ... erzeugen. In einem praktischen Ausführungsbeispiel empfängt die Empfangs- und Auswerteeinrichtung 9 das erste Antwortsignal 12a nach ca. 4 µs nach Beginn der Ausstrahlung des Abfragesignals 11 zu den Marken a, b, .... Die restlichen Antwortsignale 12b, ... folgen aufgrund der Positionierung der Reflektoren in zeitlichen Abständen von ca. 2 µs. Diese Antwortsignale 12a, 12b, ... werden über die entsprechenden Antennen der Marken der Empfangs- und Auswerteeinrichtung 9 (Figur 2) zugeführt und ausgewertet. Für den Fall, daß ein Pegel eines Antwortsignals 12a, 12b, ... einen in der Auswerteeinheit hinterlegten Schwellwertpegel unterschreitet, zeigt die Auswerteeinheit an, daß sich ein Objekt zwischen der Auswerteeinheit 9 und der dieses Antwortsignal erzeugenden Marke befindet.

## Patentansprüche

1. Anordnung zum Detektieren eines Hindernisses in einem zu überwachenden Bereich mit einer Sendeeinrichtung (8), die ein hochfrequentes Abfragesignal (11) durch den zu überwachenden Bereich zu einer Reflektor-Einrichtung abstrahlt, und mit einer Empfangs- und Auswerteeinrichtung (9), die von der Reflektor-Einrichtung ausgestrahlte Antwortsignale (12a, 12b, ...) empfängt und nach Maßgabe einer Auswertevorschrift auswertet,
**dadurch gekennzeichnet**,
daß die Reflektor-Einrichtung mindestens eine Oberflächenwellen-Identifizierungsmarke (1; a, b, c, ...) umfaßt, die jeweils eine Antenne (5) zum Empfangen des Abfragesignals (11) und zum Aussenden der Antwortsignale (12a, 12b, ...), einen Inter-Digitalwandler (3; 3a, 3b, ...) zum Umwandeln des Abfragesignals (11) in Oberflächenwellen und zum Umwandeln von reflektierten Oberflächenwellen in die Antwortsignale (12a, 12b, ...) sowie mindestens einen Reflektor (4) zur Erzeugung der reflektierten Oberflächenwellen aufweist.

2. Anordnung nach Anspruch 1, **gekennzeichnet durch** mehrere Oberflächenwellen-Identifizierungsmarken (a, b, ...), wobei an jeder Marke der oder jeder Reflektor unterschiedlich positioniert ist.

3. Anordnung nach Anspruch 1 oder 2, **gekennzeichnet durch** mehrere Oberflächenwellen-Identifizierungsmarken (a, b, ...), wobei an einer vorgebbaren Anzahl der Marken die Position des oder jedes Reflektors identisch ist.

4. Anordnung nach einem der Ansprüche 1 bis 3, **dadurch gekennzeichnet,** daß Ablenkmittel zum Ablenken der Abfrage- (11) und Antwortsignale (12a, 12b, ...) vorgesehen sind.

## Claims

1. Arrangement for detecting an obstacle in an area which is to be monitored, having a transmitting device (8) which emits a high-frequency inquiry signal (11) through the area to be monitored to a reflector device, and having a receiving and evaluating device (9) which receives response signals (12a, 12b,...) radiated from the reflector device and evaluates them in accordance with an evaluation standard,
characterised in that the reflector device comprises at least one surface wave identification mark (1; a, b, c, ...) which in each case has an antenna (5) for receiving the inquiry signal (11) and for transmitting the response signals (12a, 12b, ...), an interdigital transducer (3; 3a, 3b, ...) for converting the inquiry signal (11) into surface waves and for converting reflected surface waves into the response signals (12a, 12b, ...), and also at least one reflector (4) for generating the reflected surface waves.

2. Arrangement according to claim 1, characterised by a plurality of surface wave identification marks (a, b, ...), wherein the or each reflector is positioned differently at each mark.

3. Arrangement according to claim 1 or 2, characterised by a plurality of surface wave identification marks (a, b, ...), wherein the position of the or each reflector is identical at a preselectable number of the marks.

4. Arrangement according to one of the claims 1 to 3, characterised in that deflection means are provided to deflect the inquiry signals (11) and response signals (12a, 12b, ...).

## Revendications

1. Dispositif pour détecter un obstacle dans une région à surveiller par un dispositif (8) émetteur, qui émet un signal (11) d'interrogation haute fréquence dans la région à surveiller en direction d'un dispositif à réflecteur, et comportant un dispositif (9) de réception et d'exploitation, qui reçoit des signaux (12a, 12b, ...) de réponse émis par le dispositif à réflecteur et les exploite en fonction d'une prescription d'exploitation, caractérisé en ce que le dispositif à réflecteur comprend au moins un repère (1;a,b,c, ...) d'identification d'ondes de surface, qui comporte une antenne (5) servant à recevoir le signal (11) d'interrogation et à émettre les signaux (12a,12b, ...) de réponse, un transducteur (3;3a,3b, ...) interdigital pour convertir le signal (11) d'interrogation en ondes de surface et pour convertir des ondes de surface réfléchies en signaux (12a,12b,...) de réponse, ainsi qu'au moins un réflecteur (4) pour produire les ondes de surface réfléchies.

2. Dispositif suivant la revendication 1, caractérisé par plusieurs repères (a,b, ...) d'identification d'ondes de surface, le réflecteur ou chaque réflecteur étant positionné différemment à chaque repère.

3. Dispositif suivant la revendication 1 ou 2, caractérisé par plusieurs repères (a,b, ...) d'identification d'ondes de surface, la position du réflecteur ou de chaque réflecteur étant identique en un nombre de repères pouvant être prescrit.

4. Dispositif suivant l'une des revendications 1 à 3, caractérisé en ce qu'il est prévu des moyens de déviation des signaux (11) d'interrogation et des signaux (12a,12b, ...) de réponse.
